# EUROPÄISCHE PATENTSCHRIFT

(11) **EP 1 171 960 B1**
(45) Veröffentlichungstag und Bekanntmachung des Hinweises auf die Patenterteilung: **06.07.2005**
(21) Anmeldenummer: 00934891.3
(22) Anmeldetag: 11.04.2000
(51) Int. Cl.: H04B 1/713, H04J 13/06

(54) **VERFAHREN ZUM SYNCHRONISIEREN DER FREQUENZ BEIM DRAHTLOSEN FERNSPRECHEN SOWIE ANORDNUNG ZUR DURCHFÜHRUNG DES VERFAHRENS**
METHOD FOR SYNCHRONISING THE FREQUENCY IN A WIRELESS TELEPHONE SYSTEM, AND DEVICE FOR CARRYING OUT SAID METHOD
PROCEDE POUR SYNCHRONISER LA FREQUENCE EN TELEPHONIE SANS FIL, ET DISPOSITIF POUR LA MISE EN OEUVRE DE CE PROCEDE

(30) Priorität: 22.04.1999 DE 19918387
(43) Veröffentlichungstag der Anmeldung: 16.01.2002
(73) Patentinhaber: Infineon Technologies AG, 81669 München (DE)
(72) Erfinder: STEGEMANN, Georg, D-82216 Gernlinden (DE)
(74) Vertreter: Lange, Thomas, Dr.
(86) Internationale Anmeldenummer: PCT/DE2000/001120
(87) Internationale Veröffentlichungsnummer: WO 2000/065739

(56) Entgegenhaltungen:
- EP-A- 0 650 274
- EP-A- 0 650 304
- US-A- 5 875 186

## Beschreibung

Die Erfindung betrifft ein Verfahren zum Synchronisieren der Frequenz beim drahtlosen Fernsprechen, bei welchem eine mobile Einheit und eine ortsfeste Basisstation über eine vorgegebene Anzahl von Frequenzen kommunizieren, und bei welchem in einem Zeitabschnitt innerhalb eines Zeitrahmens eine Nachricht mit einem die Basisstation identifizierenden Code gesendet wird. Die Erfindung betrifft ferner eine Anordnung zur Durchfuhrung des Verfahrens.

Beim drahtlosen Fernsprechen werden Zeitrahmen (Frames) vorgegebener Lange festgelegt, welche in Zeitabschnitte (Time Slots) vorgegebener Länge und Anzahl unterteilt werden. Innerhalb eines Zeitabschnitts sendet die Basisstation und die mobile Einheit muß sich auf die zugehorige Basisstation aufsynchronisieren, d.h., sie muß den Zeitschlitz und die Frequenz finden, auf welcher die Basisstation Nachrichten sendet. Diese Nachrichten enthalten unter anderem Angaben zur aktuellen Frequenz und Zeitabschnitt sowie einen die Basisstation identifizierenden Code. Erst wenn auf diesem Kanal eine bestimmte Anzahl von Nachrichten empfangen wurde, kann ein Gespräch eingeleitet bzw. angenommen werden.

Wird eine Übertragung von der mobilen Einheit zur Basisstation aufgebaut, erfolgt dies auf einem vorgegebenen Kanal, d.h., einem vorgegebenen Zeitabschnitt und einer vorgegebenen Frequenz, der so lange unverändert bleibt, bis er gegebenenfalls wegen eines Interferenz erzeugenden Storers gewechselt werden muß.

Ein in Europa weit verbreitetes Protokoll, welches die Übertragung beim drahtlosen Fernsprechen festlegt, ist das Digital European Cordless Telecommunication Protocol (DECT). Dabei ist das Frequenzübertragungsband in relativ wenige Frequenzbänder unterteilt. Das DECT-Protokoll ist auch nicht für schnelle Kanalwechsel, sei es zur Übertragung der Nachricht mit Frequenzangaben und Identifikationscode oder von Nutzdaten, und zum häufigen und schnellen Frequenzwechsel geeignet.

Bei einem anderen, insbesondere in den USA eingesetzten Protokoll mit dem Namen American Digital Cordless Telecommunication Protocol (ADCT), wird das Übertragungsband in eine größere Anzahl von Frequenzbändern, z.B. 75 Frequenzbänder, unterteilt, wobei jede der Frequenzen im Mittel gleich häufig benutzt werden muß. Die ausgestrahlte Leistung soll sich also über das gesamte Frequenzband gleichmäßig verteilen. Das erfordert systembedingt einen sehr häufigen Frequenzwechsel, z.B. nach jedem Zeitrahmen, so daß jede Nachricht auf einer anderen Frequenz übertragen wird. Dieser schnelle und häufige Frequenzwechsel wird als "Frequency Hopping" bezeichnet.

Aus der US-amerikanischen Patentschrift US 5 875 186 ist ein Verfahren zum Synchronisieren der Frequenz bei einem Frequency-Hopping-Verfahren für ein drahtloses Netzwerk (WLAN - Wireless Local Area Network) bekannt. Dabei wird von einer Feststation (access unit) die aktuelle bei dem Frequency-Hopping-Verfahren verwendete Frequenzfolge anhand einer Netzidentifikationsnummer NETID gewählt, wobei die Netzidentifikationsnummer der Mobilstation (mobile unit) innerhalb des Übertragungsrahmens mitgeteilt wird. Mit Hilfe der empfangenen Netzidentifikationsnummer lässt sich auf Seiten der Mobilstation die verwendete Frequenzfolge über eine im voraus berechnete Tabelle (lookup table) identifizieren.

In der Veröffentlichung "A Class of Frequency Hop Codes with nearly Ideal Characteristics for Use in Multiple-Acess Spread-Sepctrum Communications and Radar and Sonar Systems", Svetislav V. Maric, IEEE Transactions on Communications, Vol. 40, No. 9, September 1992, werden Berechnungsvorschriften für geeignete Frequenzfolgen, insbesondere für hyperbolische Frequenzfolgen, für ein Frequeny-Hopping-Verfahren angegeben.

Der Erfindung liegt die **Aufgabe** zugrunde, ein Verfahren und eine Vorrichtung der eingangs genannten Art anzugeben, mit welchem unter Einhaltung der in einem Protokoll eines Standards zum drahtlosen Fernsprechen, in welchem ein schneller und häufiger Frequenzwechsel nicht vorgesehen ist, enthaltenen Vorgaben ein schneller und häufiger Frequenzwechsel nach einer Frequenzfolge durchgeführt werden kann, wobei die einzelnen Frequenzen der Frequenzfolge auf eine zum Stand der Technik alternative Weise bestimmt werden.

Verfahrensmäßig wird die Aufgabe dadurch gelöst, daß zumindest aus einem Teil des Identifikationscodes ein Schlüssel abgeleitet wird, daß eine vorgegebene Anzahl von unterschiedlichen, eindeutigen Frequenzfolgen festgelegt wird, die jeweils alle Frequenzen enthalten, daß eine dieser Frequenzfolgen dem Schlüssel zugeordnet und durch den Schlüssel diese Frequenzfolge ausgewählt wird, und daß bei einem Frequenzwechsel die in der zugeordneten Frequenzreihenfolge enthaltenen Frequenzen nacheinander in der vorgegebenen Reihenfolge von der betreffenden Basisstation und der mobilen Einheit verwendet werden. Grundsätzlich könnten die Frequenzfolgen in einer vollständigen Tabelle abgespeichert werden. Kern der Erfindung ist, daß jede Frequenzfolge mehrere unterschiedliche, eindeutige Unterfrequenzfolgen aufweist, welche durch Unterschlüssel festgelegt werden. Der Unterschlüssel wird von der Basisstation zusammen mit der Nachricht an die mobile Einheit gesendet, beispielsweise auf redundanten Bitstellen.

Vorteilhafterweise werden die Frequenzfolgen während des laufenden Betriebs jeweils mit unterschiedlichen Algorithmen berechnet, bei welchen die jeweils folgende Frequenz ausgehend von dem unmittelbar vorausgehenden Frequenz ermittelt wird.

Ein Grundgedanke der Erfindung besteht darin, daß bei einem Verfahren nach dem DECT-Protokoll eine bestimmte Anzahl von Frequenzlisten erzeugt wird. Die Frequenzen sind zufällig oder pseudozufällig innerhalb einer jeden Liste verteilt. Jede Liste ist eindeutig, d.h., jede Frequenz erscheint nur ein einziges Mal in einer solchen Liste. Da man die aktuelle Frequenz und den Identifikationscode kennt, kann man aus der (aufgrund beispielsweise des DECT-Protokolls) empfangenen Nachricht ableiten, welche dieser Listen verwendet wird. Aus der betreffenden Liste kann dann bei einem Frequenzwechsel jeweils die folgende Frequenz auf einfache Weise entnommen werden.

Die Erfindung hat den Vorteil, daß keine Änderungen am DECT-Protokoll vorgenommen zu werden brauchen, sondern man kann den DECT-Standard unverändert übernehmen. Es sind also keine zusätzlichen Kanäle erforderlich, über welche die Reihenfolge der Frequenzen übertragen werden muß.

Wenn dabei die Frequenzen einer Unterfolge durchlaufen sind, wird entsprechend der weiteren Tabelle bzw. des betreffenden Unterschlüssels automatisch der Durchlauf der nächsten Unterfolge eingeleitet. Es wird also nicht mehr eine eindeutige Folge von n-Frequenzwerten errechnet und durchlaufen, sondern eine Folge von eindeutigen Unterfolgen, die durch den Unterschlüssel identifiziert werden.

Es kann auch zweckmäßig sein, daß eine Frequenz für eine vorgegebene Anzahl von Zeitrahmen beibehalten wird, beispielsweise vierzig Zeitrahmen, bevor ein Frequenzwechsel entsprechend der zugehörigen Liste erfolgt, und daß eine Information übertragen wird, wie oft noch auf der aktuellen Frequenz gesendet wird. Es ist hierbei ausreichend, wenn bei der mobilen Einheit ein Zähler vorhanden ist, in welchem die Information über die Anzahl der Zeitrahmen ausgewertet wird, in welchem mit der gleichen Frequenz gesendet wird. Die Information wird auf einfache Weise aus der Nachricht abgeleitet, die neben der vorstehend bereits beschriebenen Information zur aktuellen Frequenz und dem Identifikationscode auch Prüfziffern, z.B. Block Check Message, enthält, die einer Basisstation und einer zugehörigen mobilen Einheit eindeutig zuordenbar sind.

Nachfolgend wird die Erfindung anhand eines in der Zeichnung dargestellten Ausfuhrungsbeispieles weiter beschrieben. Es zeigen schematisch:
- Fig. 1: ein Diagramm eines Übertragungsmodus;
- Fig. 2: ein Blockschaltbild einer Basisstation und
- Fig. 3: ein Blockschaltbild einer mobilen Einheit.

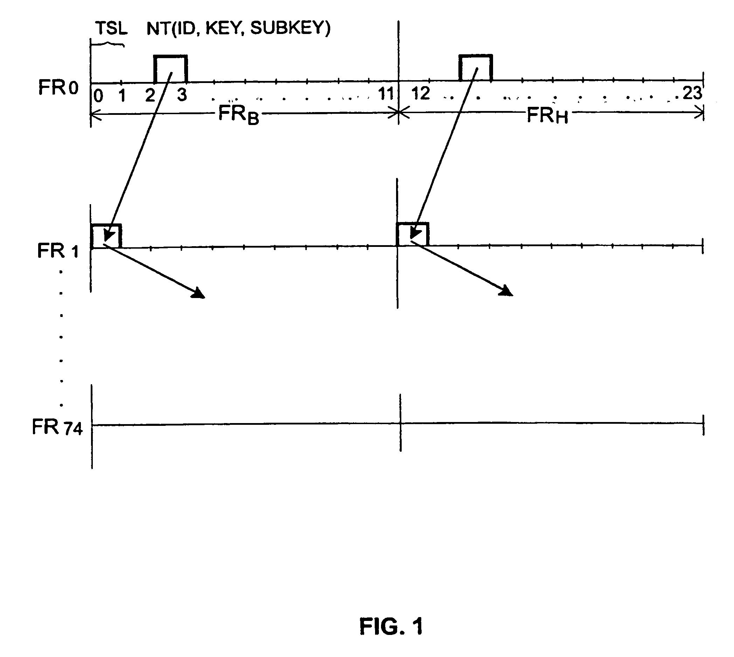

Gemaß Fig. 1 sind zeilenweise ubereinander Beispiele für drei Frequenzkanäle FR 0, FR 2 und FR 74 mit jeweils zwei Zeitrahmen FR_{B}, FR_{H} wiedergegeben. Der linke Zeitrahmen FR_{B} ist einer Basisstation zugeordnet und der rechts dargestellte Zeitrahmen FR_{H} einer mobilen Einheit.

Jeder Zeitrahmen FR_{B}, FR_{H} ist in Zeitabschnitte TSR vorgegebener Zahl unterteilt. Im vorliegenden Beispiel weist jeder Zeitrahmen zwolf Zeitschlitze TSL auf, die bezuglich der Basisstation von 0 bis 11 und bezüglich der mobilen Einheit von 12 bis 23 durchnumeriert sind.

Zur Synchronisation zwischen der Basisstation und der mobilen Einheit sendet die Basisstation in einem festen Zeitschlitz und mit einer vorgegebenen Frequenzfolge unter anderem die Nachricht NT, in welcher der die Basisstation identifizierende Code enthalten ist. Die mobile Einheit ist zunächst auf Empfang mit irgend einer der Frequenzen aus diesen Frequenzfolgen eingestellt. Wenn die gesendete und die empfangsseitig eingestellte Frequenz ubereinstimmen, und die zugehorige Basisstation identifiziert ist, synchronisiert sich die mobile Einheit auf die Basisstation auf. Dann erfolgt erfindungsgemäß ein Frequenzwechsel in Abhangigkeit vom Inhalt einer Reihe von Frequenzlisten, welche die betreffende, folgende Frequenz vorgeben. Kriterium fur die Auswahl innerhalb der Frequenzlisten ist ein Schlüssel, welcher aus dem Identifikationscode abgeleitet wird.

Die Anzahl der Frequenzlisten ist grundsätzlich frei wahlbar. Die Frequenzlisten sind unterschiedlich und eindeutig und enthalten alle beim Frequenz-Hopping-Verfahren verwendeten Frequenzen, wobei jede Liste jede Frequenz einmal in einer zufälligen oder pseudozufälligen Reihenfolge enthält. Beim Empfang einer Nachricht NT von der Basisstation kann also aufgrund der eindeutigen Zuordnung einer Liste zu einer Basisstation die nächste Frequenz fur den Frequenzwechsel ohne weiteres aus der aktuellen Empfangsfrequenz bestimmt werden.

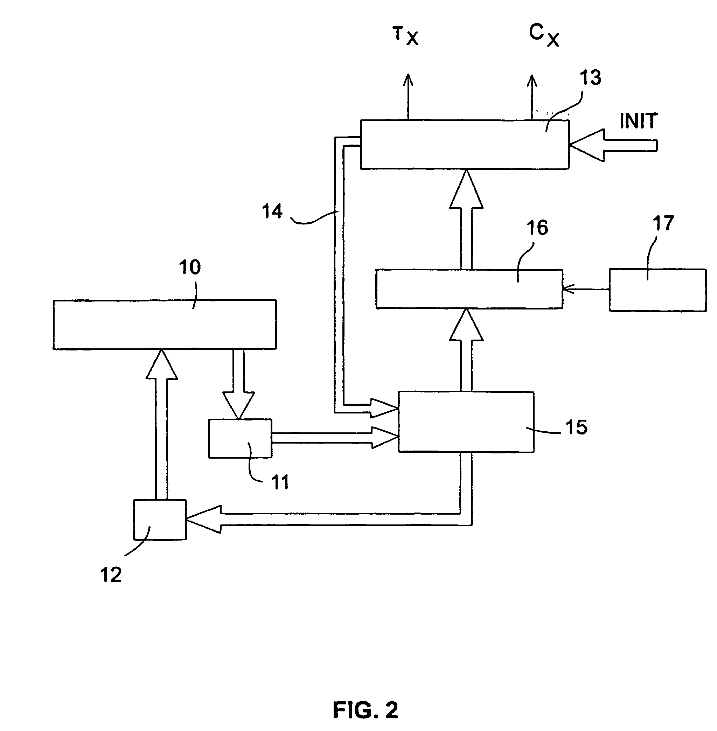

Fig. 2 zeigt für eine Basisstation ein Nachrichtenregister 10, welches die Nachricht NT mit dem Identifikationscode ID der Basisstation enthalt, welcher in fast jedem Zeitrahmen FR_{B} ausgesendet wird. Diese Nachricht ist typischerweise aus 40 Bit zusammengesetzt. Zumindest aus einem Teil dieser Nachricht, beispielsweise den sechs niederwertigsten Bits, wird ein Schlussel abgeleitet, der in einem Schlusselregister 11 gespeichert ist und welcher der Basisstation eindeutig zuordenbar ist. In einem weiteren Teil der Nachricht NT wird ein weiterer Schlussel, der Unterschlüssel, aus einem Unterschlusselregister 12 ubernommen. Der Unterschlussel kann beispielsweise in redundante Bits der Nachricht NT eingebaut werden. Er wird von der Frequenzwechsel-Berechnungseinheit 15 bereitgestellt.

Ein Frequenzregister 13 enthalt Angaben zur aktuellen Frequenz, daß heißt, der Inhalt des Frequenzregisters 13 bestimmt die aktuelle Frequenz zur Kommunikation zwischen der Basisstation und der mobilen Einheit. Sie wird zunachst uber ein Signal INIT vorgegeben.

Der Inhalt des Frequenzregisters 13 wird über eine Rückkopplung 14 der Frequenzwechsel-Berechnungseinheit 15 zugeführt, an welcher eingangsseitig auch der Inhalt des Schlüsselregisters 11 und als Eingangsgröße zur Berechnung der nächsten Frequenz anliegen. Die Frequenzwechsel-Berechnungseinheit 15 arbeitet nach einem vorgegebenen Algorithmus in der Weise, daß aus der aktuellen Frequenz gemäß Frequenzregister 13 und dem Schlüssel gemäß Schlüsselregister 11 die nächste Frequenz für einen schnellen und häufigen Frequenzwechsel errechnet werden kann, wie er beispielsweise für ein Frequency-Hopping-Verfahren gemäß ADCT erforderlich ist. Die errechnete nächste Frequenz wird einem Update-Register 16 zugeführt, welches von einem Zeitrahmenzähler 17 gesteuert wird. Jede Frequenzfolge weist mehrere unterschiedliche Unterfrequenzfolgen auf, welche jeweils einem Unterschlüssel entsprechen. Der aktuelle Unterschlüssel wird von der Frequenzwechsel-Berechnungseinheit 15 an das Unterschlüsselregister 12 übergeben.

Das Update-Register 16 speichert die errechnete "nächste" Frequenz über eine gewünschte Anzahl von Zeitrahmen FR_{B}, bevor sein Inhalt in das Frequenzregister 13 übergeben wird. Wahlweise kann somit ein Frequenzwechsel bei jedem Zeitrahmen FR_{B} oder nur nach einer vorgegebenen Anzahl von Zeitrahmen erfolgen.

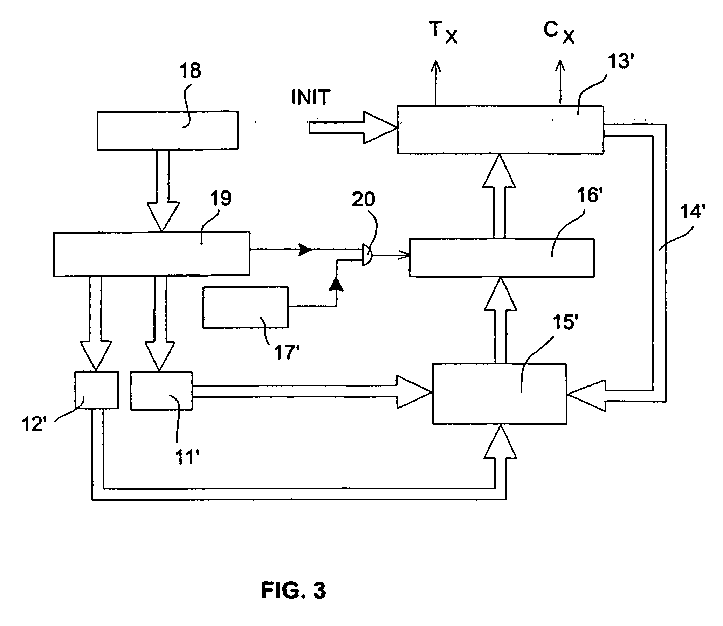

Gemäß Fig. 3 weist die mobile Einheit ein Eingangsregister 18 auf, in welchem die von der Basisstation empfangene Nachricht NT gespeichert wird. Die Nachricht wird in einer Prüfeinheit 19 daraufhin überprüft ob die empfangene Nachricht einschließlich des Identifikationscodes ID fehlerfrei ist. Der Identifikationscode ID wird in einem Schlüsselregister 11' gespeichert. Bei gültiger und fehlerfreier Nachricht wird ein Update-Register 16 aktiviert, wenn auch das Ausgangssignal eines Zeitrahmenzählers 17' aktiviert ist. Hierzu ist schematisch ein Und-Gatter 20 in der Figur dargestellt. In gleicher Weise wie bei der Basisstation gemäß Fig. 2 wird in eine Frequenzwechsel-Berechnungseinheit 15' abhängig vom Inhalt eines Frequenzregisters 13' und des Schlüsselregisters 11' sowie eines Unterschlüsselregisters 12' aufgrund der vorgegebenen Frequenzliste die nächste Frequenz für einen schnellen und häufigen Frequenzwechsel errechnet und im Update-Register 16' solange zwischengespeichert, bis sie von dort in das Frequenzregister 13' übernommen wird.

Solange keine gültige Nachricht empfangen wird, und damit das Update-Register nicht freigegeben ist, ist im Frequenzregister 13' immer eine initialisierte Frequenz abgespeichert.

## Patentansprüche

1. Verfahren zum Synchronisieren der Frequenz beim drahtlosen Fernsprechen, bei welchem
- eine mobile Einheit und eine ortsfeste Basisstation über eine vorgegebene Anzahl von Frequenzen (fₓ) kommunizieren,
- in einem Zeitabschnitt (TSL) innerhalb eines Zeitrahmens (FR) eine Nachricht (NT) mit einem die Basisstation identifizierenden Code (ID) gesendet wird,
- zumindest aus einem Teil des Identifikationscodes (ID) ein Schlüssel (KEY) abgeleitet wird,
- eine vorgegebene Anzahl n von unterschiedlichen, eindeutigen Frequenzfolgen (L₀, L₁, L₂ ... L₃₉) festgelegt wird, die jeweils alle Frequenzen (fₓ) enthalten,
- eine dieser Frequenzfolgen (L₀, L₁, ... L₃₉) dem Schlüssel (KEY) zugeordnet und durch den Schlüssel (KEY) diese Frequenzfolge ausgewählt wird,
- bei einem Frequenzwechsel die in der zugeordneten Frequenzfolge enthaltenen Frequenzen (fₓ) nacheinander in der vorgegebenen Reihenfolge von der betreffenden Basisstation und der zugehörigen mobilen Einheit verwendet werden, und
- jede Frequenzfolge mehrere unterschiedliche, eindeutige Unterfrequenzfolgen aufweist, welche durch Unterschlüssel festgelegt werden, die aus der Nachricht (NT) abgeleitet werden.

2. Verfahren nach Anspruch 1,
**dadurch gekennzeichnet,**
**dass** die Frequenzfolgen jeweils mit unterschiedlichen Algorithmen berechnet werden, bei welchen die jeweils folgende Frequenz (fₓ₊₁) ausgehend von der jeweils unmittelbar vorausgehenden Frequenz (fₓ) ermittelt wird.

3. Verfahren nach einem der Ansprüchen 1 oder 2, **dadurch gekennzeichnet, daß** nach dem vollständigen Durchlaufen einer Unterfrequenzfolge eine andere Unterfrequenzfolge verwendet wird.

4. Verfahren nach einem der vorhergehenden Ansprüche,
**dadurch gekennzeichnet,**
**daß** eine Frequenz (fₓ) für eine vorgegebene Anzahl von Zeitrahmen (FR) beibehalten wird, bevor ein Frequenzwechsel erfolgt, und daß eine Information übertragen wird, wie oft noch auf der aktuellen Frequenz (fₓ) gesendet wird.

5. Verfahren nach einem der vorhergehenden Ansprüche,
**dadurch gekennzeichnet,**
**daß** die von der Basisstation gesendete Nachricht (NT) von der mobilen Einheit auf Fehlerfreiheit überprüft wird, daß erst bei fehlerfreiem Empfang der Empfängerschlüssel (KEY) übernommen und eine Frequenzänderung zugelassen wird.

6. Frequenzwechsel-Berechnungseinheit (15, 15') zur Durchführung aller Schritle des Verfahrens nach Anspruch 1,
welche angepaßt ist, in einer Basisstation oder in einer mobilen Einheit verwendet zu werden, welcher eingangsseitig der Inhalt eines den Schlüssel (KEY) aufnehmenden Schlüsselregisters (11, 11') sowie der Inhalt eines die aktuelle Frequenz (fₓ) bestimmenden Frequenzregisters (13, 13') zugeführt werden, und welche ausgangsseitig das Frequenzregister (13, 13') ansteuert.

7. Einheit nach Anspruch 6,
**dadurch gekennzeichnet ,**
**daß** zwischen dem Frequenzregister (13, 13') und dem Ausgang ein von einem Zeitrahmenzähler (17, 17') gesteuertes Update-Register (16, 16') geschaltet ist.

8. Einheit nach Anspruch 6 oder 7,
**dadurch gekennzeichnet ,**
**daß** der die Basisstation identifizierende Code (ID) ein nach dem DECT-Standard spezifischer Code ist.

9. Verfahren nach einem der Ansprüche 1 bis 5,
**dadurch gekennzeichnet ,**
**daß** der die Basisstation identifizierende Code (ID) ein nach dem DECT-Standard spezifischer Code ist.

## Claims

1. Method for synchronizing the frequency in cordless telephony, in which
- a mobile unit and a fixed base station communicate over a defined number of frequencies (fₓ),
- a message (NT) containing a code (ID) identifying the base station is transmitted during a time slot (TSL) within a time frame (FR),
- a key (KEY) is derived from at least a part of the identification code (ID),
- a defined number n of different, unique frequency sequences (L₀, L₁, L₂ ... L₃₉) are specified, each of which contains all the frequencies (fₓ),
- one of these frequency sequences (L₀, L₁, ... L₃₉) is assigned to the key (KEY) and this frequency sequence is selected by the key (KEY),
- the frequencies (fₓ)contained in the assigned frequency sequence are used consecutively in the defined sequence by the base station concerned and the associated mobile unit when there is a frequency change, and
- each frequency sequence has several different, unique subfrequency sequences specified by subkeys that are derived from the message (NT).

2. Method according to Claim 1,
**characterized in that**
the frequency sequences are each calculated using different algorithms, in which each subsequent frequency (fₓ₊₁) is determined on the basis of the immediately preceding frequency (fₓ) in each case.

3. Method according to either of Claims 1 and 2,
**characterized in that**
once a subfrequency sequence has been run through completely, another subfrequency sequence is used.

4. Method according to one of the preceding claims,
**characterized in that**
a frequency (fₓ) is retained for a defined number of time frames (FR) before the frequency is changed, and **in that** a piece of information is transmitted specifying how many times the current frequency (fₓ) will be used for transmission.

5. Method according to one of the preceding claims,
**characterized in that**
the message (NT) transmitted from the base station is checked by the mobile unit for errors, and **in that** it is only allowed to adopt the receiver key (KEY) and make a frequency change once an error-free message is received.

6. Frequency-change computation unit (15, 15') for implementing all the steps of the method according to Claim 1,
which is adapted to be used in a base station or in a mobile unit, the input of which receives the contents of a key register (11, 11') storing the key (KEY) and the contents of a frequency register (13, 13') defining the current frequency (fₓ), and the output of which is connected to the frequency register (13, 13').

7. Unit according to Claim 6,
**characterized in that**
an update register (16, 16') controlled by a time-frame counter (17, 17') is connected between the frequency register (13, 13') and the output.

8. Unit according to Claim 6 or 7,
**characterized in that**
the code (ID) identifying the base station is a code which is specific to the DECT standard.

9. Method according to one of Claims 1 to 5,
**characterized in that**
the code (ID) identifying the base station is a code which is specific to the DECT standard.

## Revendications

1. Procédé de synchronisation de fréquence pour la téléphonie sans fil, dans lequel
- une unité mobile et une station de base fixe communiquent par l'intermédiaire d'un nombre prédéterminé de fréquences (fₓ),
- dans un créneau temporel (TSL) à l'intérieur d'une trame temporelle (FR), on envoie un message (NT) avec un code (ID) identifiant la station de base,
- on déduit une clé (KEY) au moins d'une partie du code d'identification (ID),
- on spécifie un nombre prédéterminé n de différentes séquences de fréquences uniques (L₀, L₁, L₂, ..., L₃₉) qui contiennent à chaque fois toutes les fréquences (fₓ),
- on associe l'une de ces séquences de fréquences (L₀, L₁, ..., L₃₉) à la clé (KEY) et on sélectionne cette séquence de fréquences par la clé (KEY),
- lors d'un changement de fréquence, les fréquences (fₓ) contenues dans la séquence de fréquences associée sont utilisées successivement, dans l'ordre prédéterminé, par la station de base concernée et par l'unité mobile associée, et
- chaque séquence de fréquences comporte plusieurs séquences de sous-fréquences différentes et uniques qui sont spécifiées par des sous-clés qui sont déduites du message (NT).

2. Procédé selon la revendication 1,
**caractérisé par le fait qu'**on calcule les séquences de fréquences à chaque fois avec des algorithmes différents dans lesquels la fréquence respectivement suivante (fₓ₊₁) est déterminée à partir de la fréquence respectivement immédiatement précédente (fₓ).

3. Procédé selon l'une des revendications 1 ou 2,
**caractérisé par le fait que**, après le parcours complet d'une séquence de sous-fréquences, on utilise une autre séquence de sous-fréquences.

4. Procédé selon l'une des revendications précédentes,
**caractérisé par le fait qu'**on maintient une fréquence (f_{X}) pour un nombre prédéterminé de trames temporelles (FR) avant d'effectuer un changement de fréquence et qu'on transmet une information indiquant combien de fois on émet encore sur la fréquence momentanée (f_{X}).

5. Procédé selon l'une des revendications précédentes,
**caractérisé par le fait que** l'unité mobile vérifie l'absence d'erreur dans le message (NT) envoyé par la station de base et que c'est seulement dans le cas d'une réception sans erreur que la clé de récepteur (KEY) est reprise et qu'un changement de fréquence est autorisé.

6. Unité de calcul de changement de fréquence (15, 15') pour la mise en oeuvre de toutes les étapes du procédé selon la revendication 1, qui est adaptée pour être utilisée dans une station de base ou dans une unité mobile, qui reçoit en entrée le contenu d'un registre de clé (11, 11') logeant la clé (KEY) ainsi que le contenu d'un registre de fréquence (13, 13') déterminant la fréquence momentanée (f_{X}) et qui commande en sortie le registre de fréquence (13, 13').

7. Unité selon la revendication 6,
**caractérisée par le fait qu'**un registre de mise à jour (16, 16') commandé par un compteur de trames temporelles (17, 17') est branché entre le registre de fréquence (13, 13') et la sortie.

8. Unité selon la revendication 6 ou 7,
**caractérisée par le fait que** le code (ID) identifiant la station de base est un code spécifique selon le standard DECT.

9. Procédé selon l'une des revendications 1 à 5,
**caractérisé par le fait que** le code (ID) identifiant la station de base est un code spécifique selon le standard DECT.
